# EUROPÄISCHE PATENTSCHRIFT

(11) **EP 1 662 197 B1**
(45) Veröffentlichungstag und Bekanntmachung des Hinweises auf die Patenterteilung: **21.04.2010**
(21) Anmeldenummer: 05021364.4
(22) Anmeldetag: 30.09.2005
(51) Int. Cl.: F21V 7/00, C23C 14/00, G02B 5/00, C23C 28/00

(54) **Metallreflektor und Verfahren zu dessen Herstellung**
Metal reflector and method of producing the same
Réflecteur en métal et méthode de production

(30) Priorität: 07.10.2004 DE 102004049134; 17.06.2005 DE 102005028456
(43) Veröffentlichungstag der Anmeldung: 31.05.2006
(73) Patentinhaber: Auer Lighting GmbH, 37581 Bad Gandersheim (DE)
(72) Erfinder: Mehrtens, Andree, Dr., 31073 Grünenplan (DE); Küpper, Thomas, 37581 Bad Gandersheim (DE); Zogg, Lutz, 37581 Gandersheim (DE)
(74) Vertreter: Herden, Andreas F.

(56) Entgegenhaltungen:
- EP-A- 0 649 042
- EP-A- 1 734 301
- WO-A-2004/026785
- DE-A1- 2 352 747
- DE-A1- 2 925 380
- DE-A1- 10 227 621
- DE-U1- 8 310 962
- DE-U1- 8 906 325
- US-A- 3 944 320
- US-A- 5 142 387
- US-B1- 6 561 675
- DATABASE WPI Section Ch, Week 200346 Derwent Publications Ltd., London, GB; Class M11, AN 2003-490266 XP002365224 & KR 2003 018 521 A (LEE E S) 6. März 2003 (2003-03-06)

## Beschreibung

Die Erfindung betrifft ein Verfahren zur Herstellung eines hochpräzisen Metallreflektors sowie einen Metallreflektor. Weiter ist ein Projektionssystem Gegenstand der Erfindung.

Reflektoren finden in der Praxis eine Vielzahl von Anwendungen, insbesondere sei hingewiesen auf Scheinwerferreflektoren, insbesondere im Automobilbereich sowie auf Reflektoren wie sie für Projektionssysteme beispielsweise digitale Projektoren eingesetzt werden.

Die US 6 561 675 zeigt einen Metallreflektor mit einer Kaltlichtspiegelbeschichtung und einer Infrarotstrahlung absorbierenden Schicht.

Die DE 100 29 905 zeigt einen Reflektor für ein Kraftfahrzeug, bei dem mittels eines Abscheideverfahrens eine Kaltlichtbeschichtung aufgebracht ist. Der Reflektor weist einen Grundkörper aus Kunststoff auf.

Derartige Kunststoffreflektoren haben den Nachteil, dass sie nicht besonders temperaturbeständig sind. Insbesondere wenn der Reflektor mit einer sogenannten Kaltlichtspiegelbeschichtung, also einer Infrarotstrahlung durchlässigen und zum Teil absorbierenden Schicht versehen ist, kommt es insbesondere bei Hochleistungsprojektionsanlagen zu starken thermischen Belastungen.

Tiefgezogene Metallreflektoren, die ebenfalls in der Praxis häufig verwendet werden, haben oft nicht die geforderte Präzision. Darüber hinaus sind diese Reflektoren relativ dünn. Aufgrund dieses geringen Materialvolumens ist es schwierig, insbesondere in einem Projektionssystem, die Wärme hinreichend abzuführen, so dass der Reflektor sehr hohe Temperaturen erreicht.

Die US 3 944 320 zeigt einen Kaltlichtspiegel mit einer emaillierten Beschichtung. Nachteilig an solch emaillierten Beschichtungen ist insbesondere, dass keine sehr hohe Präzision eingehalten werden kann, was die optische Güte eines Projektionssystems verschlechtert. Darüber hinaus ist die Emailleschicht recht temperaturempfindlich, so dass ein solcher Spiegel nicht für Hochleistungsprojektoren verwendet werden kann-

Um gute optische Eigenschaften zu erreichen, verwendet man für Hochleistungsprojektoren in erster Linie Reflektoren mit einem Grundkörper aus Glas. Solche Reflektoren zeichnen sich durch eine relativ hohe Präzision aus. Nachteilig ist allerdings, dass Glas ein relativ schlechter Wärmeleiter ist, so dass insbesondere bei Hochleistungsprojektoren die Wärme nur schlecht abgeführt werden kann, was zu hohen Temperaturen, insbesondere an der Reflektoroberfläche führt. Dies gilt in besonderem Maße, wenn der Reflektor eine Kaltlichtspiegelbeschichtung, also eine bevorzugt Infrarot-Strahlung durchlässige und in zumindest einem Teilbereich des sichtbaren Spektrums reflektierende Schicht aufweist. Da ein gewisser Anteil der durch den Glaskörper hindurch gehenden Infrarotstrahlung von diesem absorbiert wird, führt dieses zu einer deutlichen Erwärmung des Glaskörpers. Daher haben Glasreflektoren bei Hochleistungsprojektionsanlagen meist nur eine begrenzte Lebensdauer.

Der Erfindung liegt demgegenüber die Aufgabe zugrunde, einen Reflektor mit guten optischen Eigenschaften zu schaffen. Weiter ist Aufgabe der Erfindung, einen Reflektor bereitzustellen, der unempfindlich gegenüber hohen Temperaturen ist und es ermöglicht, entstehende Wärme gut abzuführen. Aufgabe der Erfindung ist auch eine Kombination aus Metallreflektor und Kaltlichtspiegelbeschichtung bereitzustellen, die eine hohe optische Güte hat und mit großer Präzision herstellbar ist. Weiter ist Aufgabe der Erfindung, ein Projektionssystem mit guten optischen Eigenschaften und einer hohen Wärmeabfuhr bereitzustellen. Auch soll ermöglicht werden, ein Hochleistungsprojektionssystem mit einem leicht austauschbaren Reflektor bereitzustellen.

Die Aufgabe der Erfindung wird durch ein Verfahren zur Herstellung eines hochpräzisen Reflektors, durch einen Reflektor mit einer reflektierenden Innen- und einer Außenseite sowie durch ein Verfahren zur Beschichtung eines Metallreflektors und ein Projektionssystem gemäß einem der unabhängigen Ansprüche erreicht.

Bevorzugte Ausführungsformen und Weiterbildungen der Erfindung sind den jeweiligen Unteransprüchen zu entnehmen.

Gemäß der Erfindung ist vorgesehen, einen hochpräzisen Reflektor herzustellen, indem zunächst ein Vollkörper aus Metall bereitgestellt wird und sodann die Reflektorgeometrie mit einem materialabtragenden Fertigungsverfahren erzeugt wird. So ist es möglich, dickwandige Metallreflektoren mit hoher Präzision herzustellen. Im Gegensatz dazu bestehen tiefgezogene Metallreflektoren aus dünnem Material. Hierbei lässt sich beim Tiefziehvorgang die Geometrie bei weitem nicht so präzise einstellen, wie bei Anwendung eines materialabtragenden Fertigungsverfahrens.

Der bereitgestellte Körper aus Vollmaterial kann eine beliebige Geometrie haben, beispielsweise ist denkbar, den Reflektor aus einem quaderförmigen Stahlblock oder aus einem Rundmaterial herzustellen. Es ist aber auch denkbar als Halbzeug eine Form bereitzustellen, die schon in Grundzügen der Geometrie eines Reflektors entspricht, so dass weniger Material abgetragen werden muss.

Es hat sich überraschenderweise herausgestellt, dass die so hergestellten Metallreflektoren eine ähnliche Präzision wie Glasreflektoren aufweisen, ähnlich optisch gute Eigenschaften haben können und darüber hinaus noch wesentlich billiger herzustellen sind als entsprechende Hochpräzisionsglasreflektoren.

Mit materialabtragenden Fertigungsverfahren ist es zudem möglich, beliebige Reflektorgeometrien zu erzeugen, die nicht nur eine parabolische oder elliptische Form sondern auch beliebige Facettenformen umfassen.

Die erfindungsgemäß hergestellten Metallreflektoren zeichnen sich zudem durch eine hohe Temperaturbeständigkeit und vor allem dadurch aus, dass die Wärme besonders gut abgeführt werden kann, da dickwandige Reflektorgeometrien möglich sind.

Bei einer bevorzugten Ausführungsform des Verfahrens wird ein spanabhebendes Verfahren vorgenommen, insbesondere die Reflektorgeometrie gedreht oder gefräst. Solche Verfahren sind in der Praxis gängig und lassen sich beispielsweise mit diamantbestückten Werkzeugen in sehr hoher Präzision durchführen.

Insbesondere wenn kompliziertere Geometrien erzeugt werden sollen, bietet sich an, zumindest Teile der Reflektorgeometrie durch ein Elektroerodierverfahren zu erzeugen. Insbesondere schmale Kanäle lassen sich häufig nur mit derartigen Fertigungsverfahren realisieren.

Bevorzugterweise wird die Reflektoroberfläche, also die reflektierende Fläche auf der Vorderseite des Reflektors, oberflächenbehandelt, insbesondere geläppt; geschliffen oder poliert, um eine geringe Rauhigkeit und hohe Passgenauigkeit zu erzeugen.

Bei einer bevorzugten Ausführungsform des Verfahrens wird eine parabolische oder elliptische Reflektorgeometrie erzeugt, aber auch beliebige andere Geometrien wie eine Facettengeometrie ist denkbar.

Bei einer Weiterbildung der Erfindung wird auf der Rückseite des Reflektors, also der Seite, die der reflektierenden Seite abgewandt ist, ebenfalls mittels eines materialabtragenden Verfahrens eine Struktur erzeugt.

Insbesondere ist durch das erfindungsgemäße Verfahren möglich, die Rückseite mit einem Gewinde mit Kühlrippen oder mit Pass- oder Zentrierungsmitteln zu versehen. So kann ein einstückiger Reflektor bereitgestellt werden, der auf der Rückseite Funktionselemente, wie Zentrierstifte, Gewinde etc. aufweist.

Dabei ist insbesondere von Vorteil, dass der Reflektorgrundkörper im Wesentlichen aus einem Metall, insbesondere Edelstahl, Aluminium, Kupfer oder Silber besteht. Anders als Glas neigen diese Materialien nicht zum spröden Brechen, so dass auch komplizierte Geometrien oder Kühlkanäle möglich sind. Bevorzugt sind insbesondere Metalle mit hoher Wärmeleitfähigkeit wie bestimmte Stahllegierungen, Aluminiumkupfer oder Silber.

Bei einer Weiterbildung der Erfindung wird der Reflektor auf der Vorderseite mit einer Reflexionsschicht, insbesondere mit einer Aluminium und Silber umfassenden Schicht beschichtet. Derartige Schichten, die den Reflexionsgrad einer Oberfläche erhöhen, sind allgemein bekannt.

Insbesondere ist auch vorgesehen, den metallischen Reflektor mit einer geeigneten Kaltlichtspiegelschicht zu beschichten. Dabei handelt es sich um dem Fachmann bekannte Infrarotlicht-absorbierende und das sichtbare Licht in zumindest einem Teilbereich des sichtbaren Spektrums reflektierende Beschichtungen, die aus dem metallischen Reflektor einen Kaltlichtspiegel machen. Dabei kommt dem erfindungsgemäßen Reflektor vor allem zugute, dass er eine hohe Wärmeabfuhr ermöglicht, da eine solche Beschichtung zu einer stark erhöhten thermischen Belastung des Reflektors führt.

Insbesondere ist vorgesehen, eine optische Funktionsschicht, zu der gemäß der Anmeldung auch die Kaltlichtspiegelschicht gezählt wird, mittels eines PVD (Physical Vapor Deposition)- oder eines CVD (Chemical Vapor Deposition)-verfahrens aufzubringen. Derart aufgebrachte Schichten zeichnen sich durch eine hohe Maßhaltigkeit aus, gehen eine gute Verbindung mit dem Substrat ein und können in dünnen Schichtdicken aufgebracht werden.

Insbesondere ist vorteilhaft, wenn zumindest zwei Schichten in einer Anlage, beispielsweise einer Vakuumanlage aufgebracht werden. Dabei ist insbesondere daran gedacht, dass zunächst eine Reflexionsschicht und sodann eine Kaltlichtspiegelschicht aufgebracht wird. Darüber hinaus bietet sich noch an, den Reflektor mit einer transparenten Antikratzschicht oder einer selbstreinigenden Schicht zu versehen. Werden die Schichten bevorzugterweise in einer Anlage aufgebracht, kann der gesamte Beschichtungsvorgang in einem Arbeitsgang durchgeführt werden.

Die Erfindung betrifft weiter einen Reflektor mit einer reflektierenden Innenseite und einer Außenseite, der ein Metallsubstrat und zumindest eine mittels eines PVD- oder CVD-Verfahrens abgeschiedene Beschichtung aufweist.

Die Erfinder haben herausgefunden, dass bisher für die Beschichtung von Kunststoff oder Glas entwickelte PVD- und CVD-Verfahren sich grundsätzlich bei Anpassung der entsprechenden Prozessparameter auch für die Beschichtung von Metallreflektoren eignen. Insbesondere ermöglicht ein solcher Metallreflektor mit einer abgeschiedenen Beschichtung, insbesondere einer Reflexbeschichtung, ähnlich gute optische Eigenschaften wie ein Glasreflektor bei einer wesentlich verbesserten Wärmeabfuhr und erhöhter Lebensdauer.

Zur Verbesserung der Wärmeabfuhr ist vorgesehen, an der Reflektoraußenseite Kühlrippen anzuordnen. Alternativ oder kumulativ dazu kann der Reflektor auch Kühlkanäle für den Anschluss an einen externen Kühlkreislauf aufweisen. So ist es möglich, den Reflektor direkt zu kühlen und die Wärme über einen externen Kühler abzuführen. Insbesondere ist vorgesehen, zumindest einen Flansch zum Anschluss an einen externen Kühlmittelkreislauf bereitzustellen. Dabei ist wesentlich, dass der Reflektorgrundkörper im Wesentlichen aus Metall besteht. Präzise Gewinde und Kühlkanäle lassen sich in Glas nur sehr schwer anbringen.

Bei eine Weiterbildung der Erfindung weist der Reflektor einen zumindest teilweise mit einem Kühlmittel gefüllten Hohlraum auf. In diesem Hohlraum, in dem sich beispielsweise auch Kühlrippen befinden können, kann ein Kühlmittel zirkulieren und so alleine über eine Konvektion den Reflektor kühlen. So ist sogar denkbar, selbst für Hochleistungsprojektoren Reflektoren bereitzustellen, die ohne eine Zwangsbelüftung auskommen. Selbst ventilatoren-betriebene Zwangsbelüftungen bei Hochleistungsprojektionssystemen haben den Nachteil, dass sie relativ laut sind. Dies ist insbesondere für Beamer zur Filmprojektion äußerst nachteilig.

Bei einer Weiterbildung der Erfindung wird ein Kühlmittel eingefüllt, das in etwa bei Betriebstemperatur einen Phasenübergang macht. Beispielsweise ist denkbar, den Hohlraum des Reflektors nur teilweise mit einem solchen Kühlmittel zu füllen, welches durch Kondensation und Übergang in den gasförmigen Zustand eine höhere Kühlleistung ermöglicht.

Bei einer Weiterbildung der Erfindung weist der Reflektor zumindest auf seiner Rückseite Passmittel auf. Unter Passmittel wird jede dem Fachmann bekannte Vorrichtung verstanden, die es ermöglicht, den Reflektor in einer entsprechenden Halterung definiert einzusetzen, Als Passmittel können Stifte, ein Nut- und Federsytem oder auch ein Konus sowie weitere dem Fachmann bekannte Mittel verwendet werden. Hier kommt ebenfalls dem erfindungsgemäßen Reflektor zugute, dass an ein Metallsubstrat mit hoher Präzision solche Passmittel anbringbar oder einbringbar sind, die es dann ermöglichen, den Reflektor exakt definiert einzusetzen. So ist es möglich, ein Projektionssystem bereitzustellen, bei dem der Reflektor leicht austauschbar ist und nicht nach dem Austausch justiert werden muss.

Insbesondere wenn es sich um einen Reflektor für einen Projektor handelt, ist es von Vorteil, wenn dieser auf der Innenseite eine bevorzugt Infrarotabstrahlung absorbierende Beschichtung aufweist, also als Kaltlichtspiegel ausgestaltet ist.

Die erfindungsgemäß aufgebrachte Infrarot-absorbierende Schicht umfasst TiCN, WCH oder AlTiN-Schichten, eine Schwarzschicht, die nicht nur im Infraroten, sondern auch im sichtbaren Spektralbereich absorbiert. Diese werden durch Dampfphasenabscheidung aufgebracht. erwiesen. Eine gute thermische Belastbarkeit weisen insbesondere absorbierende Email-Schichten auf. Noch eine Möglichkeit ist, eine Schwarzschicht galvanisch oder durch chemische Reaktion mit dem Substratmaterial herzustellen. Auf diese Weise wird eine absorbierende Eloxal-Schicht erzeugt. Schließlich können auch Schwarzchrom und/oder Schwarznickel-Schichten aufgebracht werden, wozu sich ebenfalls eine galvanische Abscheidung eignet. Derartige Schichten weisen sehr gute Absorbtionseigenschaften über einen weiten Wellenlängenbereich auf.

Um gute Kaltlichteigenschaften in Verbindung mit einem auf der Schwarzschicht aufgebrachten Interferenzschichtsystem zu erreichen, weist gemäß einer Weiterbildung der Erfindung eine zumindest auf der Reflektorinnenseite angeordnete Schwarzschicht im sichtbaren und insbesondere auch im Infrarotbereich bis 1800 Nanometern Wellenlänge eine Absorption von zumindest 80%, bevorzugt bis 2400 Nanometern Wellenlänge eine Absorption von zumindest 75% auf.

Vorteilhafterweise hat die reflektierende Innenseite des Reflektors einen Mittenrauhwert Rₐ von unter 200 nm, bevorzugt von unter 50 nm und besonders bevorzugt von unter 20 nm. Solche glatten Strukturen zeichnen sich durch ein hohes Reflexionsvermögen aus.

Bei einer bevorzugten Ausführungsform des Reflektors liegt zumindest auf der Innenseite die Toleranzfeldbreite unter 200 µm, bevorzugt unter 50 µm und besonders bevorzugt unter 10 µm. Es ist mit einem Metallreflektor möglich, ein hochpräzises Bauteil bereitzustellen, welches nur äußerst geringe Abweichungen vom Sollmaß aufweist.

Bei einer bevorzugten Ausführungsform des Reflektors weist dieser zumindest auf der reflektierenden Innenseite eine Materialdicke über 0,3 mm, bevorzugt über 0,8 mm und besonders bevorzugt über 1,5 mm auf. Es ist somit vorgesehen, dass zumindest die Reflektorschale eine relativ dickwandige Metallstruktur darstellt, die eine besonders gute Wärmeabfuhr ermöglicht. Dies ist bei tiefgezogenen Metallreflektoren nicht möglich, da sich Tiefziehverfahren nur für dünnwandige Bleche eignen.

Bei einer bevorzugten Ausführungsform ist der Reflektor einstückig ausgebildet. Im Sinne der Erfindung wird unter Reflektor das gesamte Bauteil verstanden, welches wie ebenfalls als Gegenstand der Erfindung beschrieben, auch Kühlkanäle, Kühlrippen oder ähnliches aufweist.

Bei einer Weiterbildung der Erfindung weist der Reflektor zumindest auf der Rückseite Einsenkungen mit im Wesentlichen muldenförmigem Querschnitt auf. Solche auch als Dellen oder Dimpel bekannte Einsenkungen führen in besonders bevorzugter Weise dazu, dass wenn ein Fluid an dem Reflektor vorbei strömt, sich Wirbel beziehungsweise tornadoartige Strukturen bilden, was die Wärmeabfuhr erheblich verbessern kann.

Weiter wird ein Metallumfassendes Reflektorsubstrat bereitgestellt und eine Funktionsschicht, insbesondere eine Absorptionsschicht und/oder eine Reflexionsschicht auf der Oberfläche des Reflektorsubstrates abgeschieden. Unter Absorptionsschicht wird eine Schicht verstanden, die zumindest in einem Teilbereich des Wellenspektrums absorbierende Eigenschaften aufweist. Die Reflexionsschicht weist reflektierende Eigenschaften zumindest in einem Teilbereich des sichtbaren Wellenspektrums auf. Durch ein Abscheideverfahren, insbesondere ein chemisches oder physikalisches Abscheideverfahren lassen sich Schichten mit sehr hoher Präzision erzeugen.

Es ist vorgesehen als Reflektorsubstrat entweder ein aus einem Vollmaterial durch ein materialabtragendes Fertigungsverfahren hergestelltes Substrat oder einen tiefgezogenen Metallgrundkörper zu verwenden.

Insbesondere ist vorgesehen, einen Kaltlichtmetallreflektor bereitzustellen, der eine Kaltlichtspiegelbeschichtung aufweist, die mittels eines Abscheideverfahrens aufgebracht wurde.

Derartige Schichten lassen sich insbesondere durch das Abscheiden einer Metallschicht und anschließendes oxidieren sowie das Abscheiden von Oxid- und Nitritschichten erreichen.

Insbesondere ist vorgesehen, zunächst eine Reflexionsschicht, insbesondere eine Aluminium- oder Silberschicht zur Erhöhung des Reflexionsvermögens der Oberfläche des metallischen Reflektors abzuscheiden, da viele metallische Werkstoffe, insbesondere Werkzeugstähle, von sich aus nur ein geringeres Maß an Reflexion im sichtbaren Bereich aufweisen.

Sodann ist vorgesehen, eine transparente Wechselschicht aus hoch- und niedrigbrechenden Teilschichten, wie beispielsweise Siliziumoxid und Titanoxid als Kaltlichtspiegelschicht aufzubringen. Unter transparent im Sinne der Anmeldung wird dabei eine Schicht verstanden, die zumindest in einem Teilbereich des sichtbaren Wellenspektrums transparente Eigenschaften aufweist. Insbesondere ist in dem Wechselschichtsystem auch mindestens eine Chromoxidschicht zur teilweisen Absorption der Infrarot-Strahlung vorgesehen.

Vorteilhafte dem Fachmann bekannte Abscheideverfahren sind PVD-Verfahren wie Sputter- und Aufdampfverfahren sowie Elektronenstrahlverdampfung oder CVD-Verfahren, insbesondere Plasma-unterstütze CVD-Verfahren.

Bei einer Weiterbildung des Verfahrens ist insbesondere bei einem tiefgezogenen Metallreflektor vorgesehen, auf der Rückseite Kühlrippen anzuschweißen, anzulöten oder anzukleben. Insbesondere bei dünnwandigen tiefgezogenen Metallreflektoren ist die Wärmeabfuhr häufig nur unzureichend. Gemäß der Erfindung ist daher vorgesehen, Kühlrippen auf die Reflektorrückseite anzulöten.

Bei einer besonderen Ausführungsform ist vorgesehen, parallel zur Reflektorachse Finnen anzuordnen. Unter Finnen werden im Wesentlichen nach hinten spitz zulaufende Bleche verstanden.

Bei einer Weiterbildung der Erfindung ist vorgesehen, die Finnen gleichzeitig mit Zentrierungsmitteln zu versehen, insbesondere am Ende der Finnen Passstifte anzubringen, mittels derer der Reflektor passgenau in eine entsprechende Halterung eingesetzt werden kann.

Die Erfindung kann Verwendung finden in einem Projektionssystem, umfassend einen Metallreflektor und eine Halterung für den Metallreflektor, wobei Passmittel zwischen Reflektor und Halterung vorgesehen sind.

Unter Metallreflektor wird im Sinne der Anmeldung ein Reflektor verstanden, der im Wesentlichen Metall aufweist, also insbesondere ein erfindungsgemäßer Reflektor mit einem Metallsubstrat. Mittels der Passmittel, bei denen es sich insbesondere um Passstifte, ein Nut- und Federsystem oder einen Konus handelt, ist es möglich, den Reflektor passgenau in eine Halterung zu verankern. So ist es möglich, ein Projektionssystem mit Reflektor und Halterung bereitzustellen, welches es ermöglicht, den Reflektor auszutauschen, ohne danach eine Justierung vornehmen zu müssen. In vorteilhafter Weise wird insbesondere ein aus einem Vollmaterial hergestellter Reflektor verwendet, bei dem die Passmittel Teil der Rückseitenstruktur sein können. Dabei kommt dem Projektionssystem zugute, dass ein solcher Metallreflektor mit hoher Maßhaltigkeit herstellbar ist und mechanische Funktionselemente'wie Stifte und Schrauben sich besonders gut aus einem Metallvollmaterial bilden lassen.

Bei einer Weiterbildung der Erfindung ist beim Projektionssystem zwischen Reflektor und Halterung eine Wärmeleitpaste angeordnet. So wird die Wärmeableitung vom Reflektor zur Halterung weiter verbessert.

Bei einer Weiterbildung der Erfindung sind Reflektor und Halterung mittels eines einrastbaren Systems, insbesondere mittels eines Bajonettverschlusses miteinander verbindbar. Insbesondere ist vorgesehen, dass der Reflektor in der Halterung einrastbar ist und so leicht eingesetzt und entnommen werden kann.

Gemäß der Erfindung kann die Kühlung des Reflektors, der insbesondere eine Kaltlichtspiegelbeschichtung aufweist, auch über die Halterung erfolgen. Es ist auch vorgesehen, zwischen Reflektor und Halterung ein Kühlmittel hindurchzuführen. Dabei kann es sich um ein beliebiges Fluid, also auch um Luft handeln. Soll die Wärme auch über die Halterung abgeführt werden, ist es zweckmäßig, für die Halterung ebenfalls ein Material mit guter Wärmeleitfähigkeit, insbesondere ein Metall zu verwenden. Auch kann man an der Halterung Kühlrippen anbringen. So ist es möglich ein Projektionssystem bereitzustellen, bei dem keine motorisch betriebenen Ventilatoren verwendet werden müssen. Die Wärme kann alleine über Strahlung und Konvektion abgeführt werden.

Vorteilhafterweise befindet sich vor dem Reflektor eine transparente Scheibe oder Linse zum Schutz oder zur Erzielung von weiteren optischen Funktionen.

Bei einer Weiterbildung der Erfindung wird eine Scheibe verwendet, die bevorzugt im Infrarotbereich Licht reflektiert und somit verhindert, dass Wärmestrahlung nach außen dringt. Ermöglicht wird eine solche Konstruktion insbesondere durch die Eigenschaft eines erfindungsgemäßen Metallreflektors, um die Wärme schnell abzuführen.

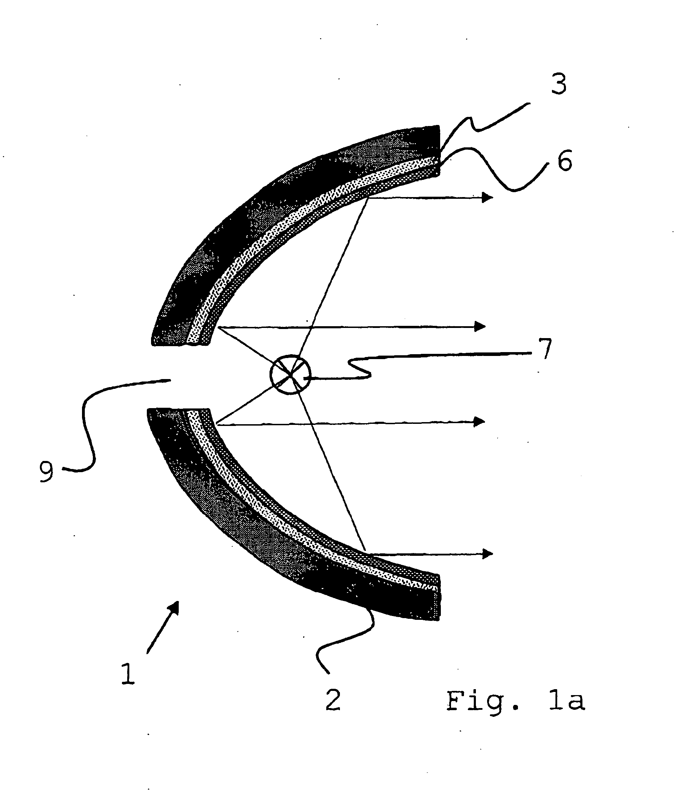

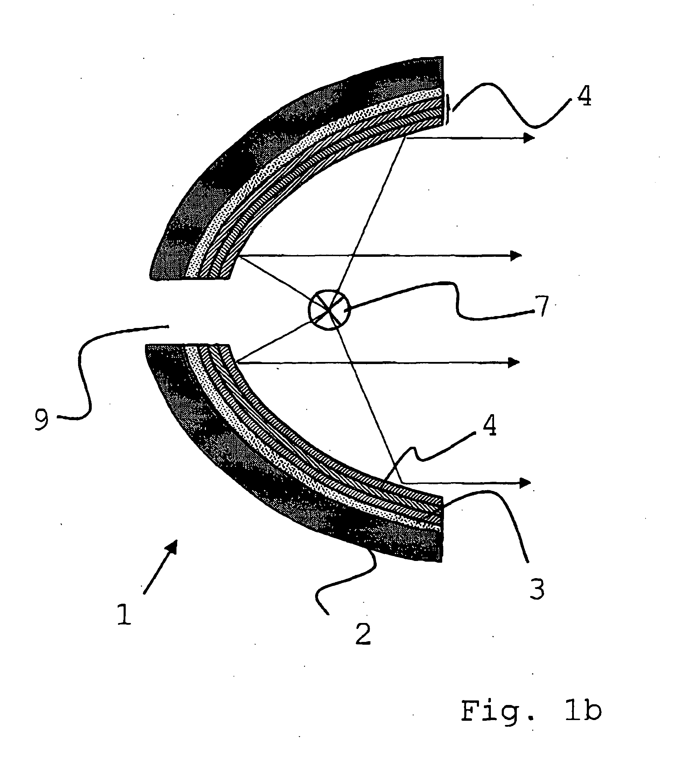

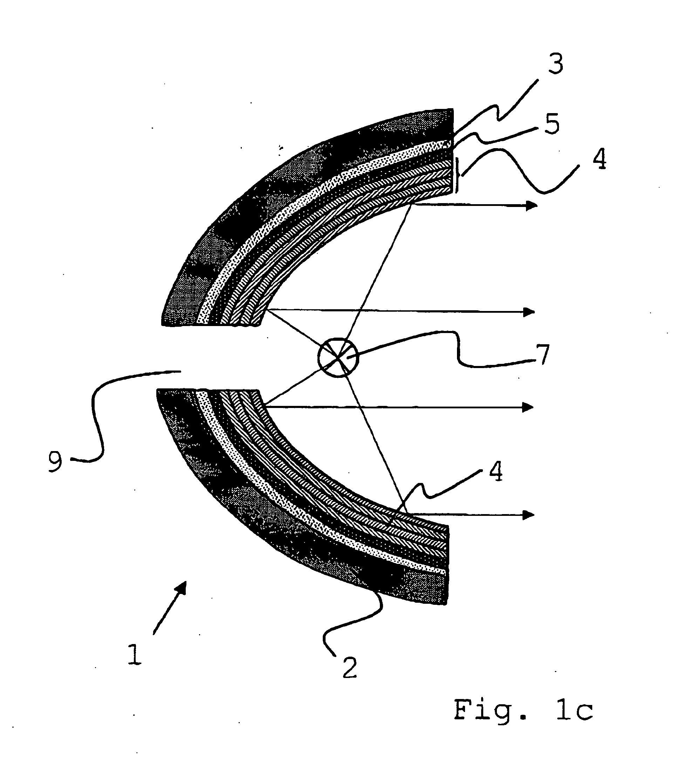

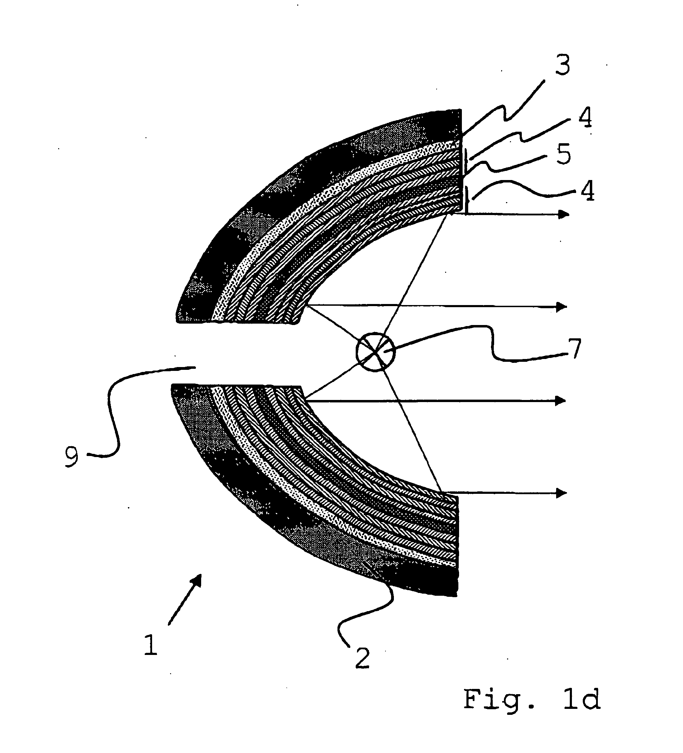

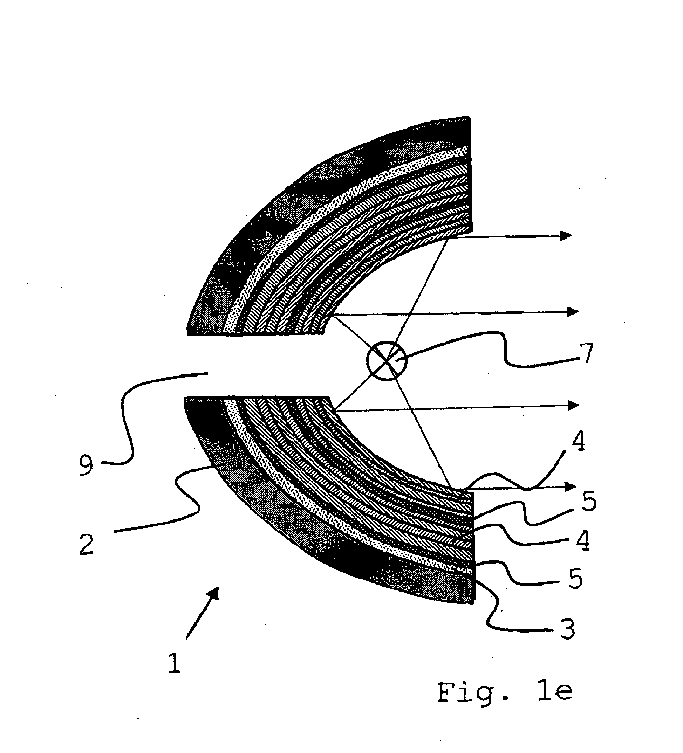

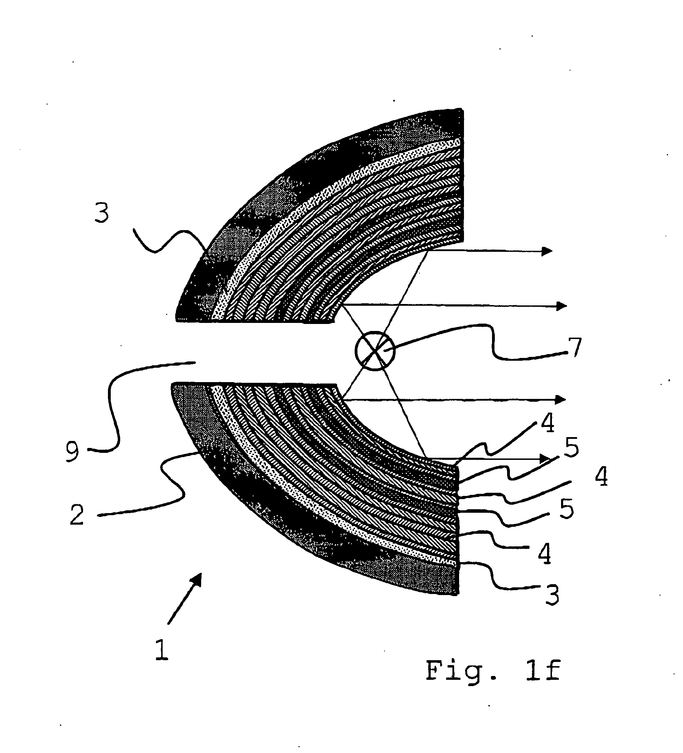

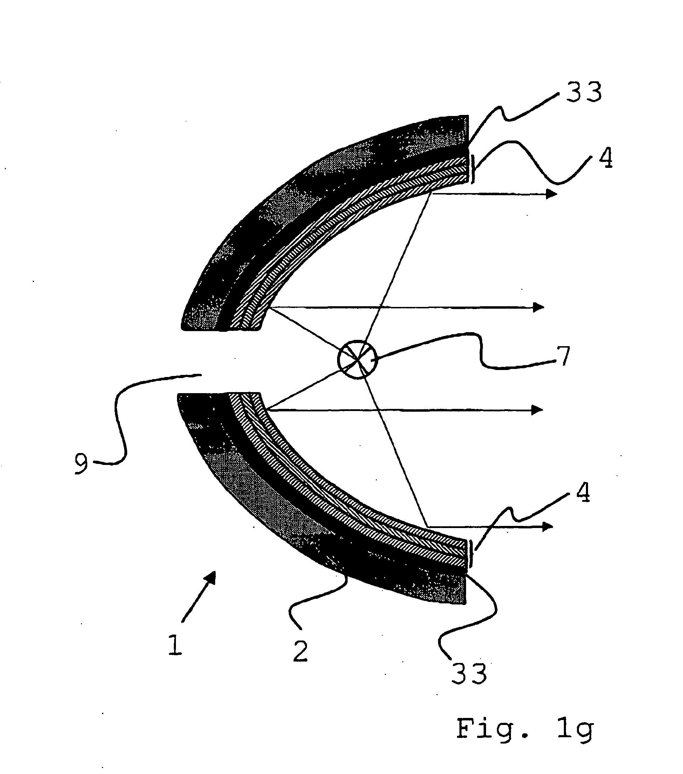

Die Erfindung soll im Folgenden anhand der Zeichnungen Figur 1 bis Figur 10 näher erläutert werden.
- Fig. 1a: zeigt eine schematische Schnittansicht eines Reflektors mit einer reflektierenden Aluminium- oder Silberschicht und einer darauf befindlichen Schutzschicht, z.B. aus SiO2,
- Fig. 1b: zeigt eine schematische Schnittansicht eines Reflektors mit einer reflektierenden Aluminium- oder Silberschicht und einem darauf befindlichen Wechseischichtsystem aus Si02- und Ti02-Schichten zur Erhöhung der Reflexion im sichtbaren Bereiches des Spektrums,
- Fig. 1c: zeigt eine schematische Schnittansicht eines Reflektors mit einer reflektierenden Aluminium- oder Silberschicht und einer darauf befindlichen Kaltlichtspiegelbeschichtung, bestehend aus einer Chromoxidschicht und einem darauf befindlichen Wechselschichtsystem aus SiO2- und TiO2-Schichten,
- Fig. 1d: zeigt eine schematische Schnittansicht eines Reflektors mit einer reflektierenden Aluminium- oder Silberschicht und einem darauf befindlichen Wechselschichtsystem aus Si02- und TiO2-Schichten zur Erhöhung der Reflexion im sichtbaren Bereich des Spektrums und einer darauf befindlichen Kaltlichtspiegelbeschichtung, bestehend aus einer Chromoxidschicht und einem darauf befindlichen Wechselschichtsystem aus SiO2- und TiO2-Schichten,
- Fig. 1e: zeigt eine schematische Schnittansicht eines Reflektors mit einer reflektierenden Aluminium- oder Silberschicht und einer darauf befindlichen zweigeteilten Kaltlichtspiegelbeschichtung, bestehend aus einer Chromoxidschicht und einem darauf befindlichen Wechselschichtsystem aus SiO2- und TiO2-Schichten und einer weiteren Chromoxidschicht mit einem darauf befindlichen Wechselschichtsystem aus SiO2-und Ti02-Schichten,
- Fig. If: zeigt eine schematische Schnittansicht eines Reflektors mit einer reflektierenden Aluminium- oder Silberschicht und einem darauf befindlichen Wechselschichtsystem zur Erhöhung der Reflexion im sichtbaren Bereich des Spektrums sowie einer darauf befindlichen zweigeteilten Kaltlichtspiegelbeschichtung, bestehend aus einer Chromoxidschicht und einem darauf befindlichen Wechselschichtsystem aus Si02- und TiO2-Schichten und einer weiteren Chromoxidschicht mit einem darauf befindlichen Wechselschichtsystem aus Si02-und Ti02-Schichten,
- Fig. 1g: zeigt ein Beispiel eines erfindungsgemäßen Reflektors mit einer absorbierenden Schwarzschicht und einem darauf befindlichen Wechselschichtsystem,
- Fig. 2: zeigt ebenfalls eine schematische Schnittansicht eines Reflektors mit einer Hochleistungslampe,
- Fig. 3: zeigt eine schematische Ansicht eines Reflektors umfassend Kühlrippen,
- Fig. 4: zeigt eine schematische Ansicht eines Reflektors mit Kühlrippen,
- Fig. 5: zeigt eine schematische perspektivische Ansicht eines Reflektors mit muldenförmigen Einbuchtungen,
- Fig. 6: zeigt eine weitere schematische Schnittansicht eines Reflektors umfassend Zentrierungsmittel und eine reflektierende Schutzscheibe,
- Fig. 7: zeigt eine schematische Ansicht eines Reflektors umfassend eine externe Kühlmittelzufuhr,
- Fig. 8: zeigt eine weitere schematische Schnittansicht eines Reflektors umfassend einen mit einem Hohlraum für ein Kühlfluid und Kühlrippen ausgestatteten Grundkörper,
- Fig. 9: zeigt eine Beschichtungsanlage vorgesehen zur Beschichtung der erfindungsgemäßen Reflektoren.
- Fig. 10: zeigt eine schematische Ansicht eines Projektionssystems.
- Fig. 11 bis 13: zeigen spektrale Verläufe der Reflektivität von Schwarzschichten, wie sie als infrarotabsorbierende Schichten für Kaltlichtreflektor-Beschichtungen für erfindungsgemäße Reflektoren eingesetzt werden können.

Fig. 1a bis If zeigen eine schematische Schnittansicht eines Reflektors 1 in verschiedenen Ausführungsformen der aufgebrachten Beschichtung. Der Reflektor ist mittels eines spanabhebenden Verfahrens gefertigt aus einem Metallblock und weist demzufolge ein dickwandiges Metallsubstrat 2 auf. Die Reflektorgeometrie ist im Wesentlichen parabolisch. Der Reflektor 1 weist eine konzentrische Aussparung 9 auf, durch die ein Leuchtmittel eingeführt werden kann.

Gemäß des Ausführungsbeispiels Fig. 1a ist das Metallsubstrat 2 mit einer Silber- oder Aluminiumreflexschicht 3 sowie einer Schutzschicht 6 in Form einer einzelnen Schicht beispielsweise SiO2 versehen. Im Zentrum des Reflektors ist schematisch eine Lichtquelle 7 eingezeichnet.

Gemäß des Ausführungsbeispiels Fig. 1b ist das Metallsubstrat 2 mit einer Silber- oder Aluminiumreflexionsschicht 3 sowie einer Wechselschicht 4 versehen. Die Wechselschicht 4 besteht in dem Ausführungsbeispiel aus insgesamt drei jeweils im Wechsel aufgesputterten Titanoxid- und Siliziumoxidschichten. Die aufgebrachten Wechselschichten haben in diesem Ausführungsbeispiel die Funktion, die Reflexion zumindest eines Teils des sichtbaren Lichtes gegenüber der Reflexion der unbeschichteten Metalloberfläche des Reflektors 1 zu erhöhen. Im Zentrum des Reflektors ist schematisch eine Lichtquelle 7 eingezeichnet.

Gemäß des Ausführungsbeispiels Fig. 1c ist das Metallsubstrat 2 mit einer Silber- oder Aluminiumreflexionsschicht 3 sowie einer teilweise absorbierenden Chromoxidschicht 5 und einer Wechselschicht 4 versehen. Die Wechselschicht 4 besteht in dem Ausführungsbeispiel aus insgesamt vier jeweils im Wechsel aufgesputterten Titanoxid- und Siliziumoxidschichten. Die Funktion dieses Ausführungsbeispiels ist die einer Kaltlichtspiegelbeschichtung auf einem reflektierenden Metallsubstrat. Im Zentrum des Reflektors ist schematisch eine Lichtquelle 5 eingezeichnet.

Gemäß des Ausführungsbeispiels Fig. 1d ist das Metallsubstrat 2 mit einer Silber- oder Aluminiumreflexschicht 3 und einer darauf befindlichen Wechselschicht 4 zur Erhöhung der Reflexion der metallischen Oberfläche versehen. Die Wechselschicht 4 besteht in dem Ausführungsbeispiel aus insgesamt drei jeweils im Wechsel aufgesputterten Titanoxid- und Siliziumoxidschichten. Auf diese hoch reflektierende Oberfläche ist eine Kaltlichtspiegelbeschichtung aufgebracht, bestehend aus einer teilweise absorbierenden Chromomidechicht 5 und einer weiteren Wechselschicht 4. Diese weitere Wechselschicht 4 besteht in dem Ausführungsbeispiel aus insgesamt vier jeweils im Wechsel aufgesputterten Titanoxid- und Siliziumoxidschichten. Die Funktion dieses Ausführungsbeispiels ist die einer Kaltlichtspiegelbeschichtung auf einem besonders hoch reflektierenden Metallsubstrat. Im Zentrum des Reflektors ist schematisch eine Lichtquelle 7 eingezeichnet.

Gemäß des Ausführungsbeispiels Fig. 1e ist das Metallsubstrat 2 mit einer Silber- oder Aluminiumreflexionsschicht 3 versehen. Auf diese ist eine geteilte Kaltlichtspiegelbeschichtung aufgebracht, bestehend aus jeweils einer teilweise absorbierenden Chromoxidschicht 5 und einer nachfolgenden Wechselschicht 4. Die Wechselschicht 4 besteht in dem Ausführungsbeispiel aus insgesamt vier jeweils im Wechsel aufgesputterten Titanoxid- und Siliziumoxidschichten. Die Funktion dieses Ausführungsbeispiels ist die einer Kaltlichtspiegelbeschichtung auf einem reflektierenden Metallsubstrat mit besonders guter Kaltlichtspiegelwirkung. Im Zentrum des Reflektors ist schematisch eine Lichtquelle 7 eingezeichnet.

Gemäß des Ausführungsbeispiels Fig. 1f ist das Metallsubstrat 2 mit einer Silber- oder Aluminiumreflexionsschicht 3 versehen und einer darauf befindlichen Wechselschicht 4 zur Erhöhung der Reflexion der metallischen Oberfläche. Die Wechselschicht 3 besteht in dem Ausführungsbeispiel aus insgesamt drei jeweils im Wechsel aufgesputterten Titanoxid- und Siliziumoxidschichten, Auf diese ist eine geteilte Kaltlichtspiegelbeschichtung aufgebracht, bestehend aus jeweils einer teilweise absorbierenden Chromoxidschicht 5 und einer nachfolgenden Wechselschicht 4. Die Wechselschicht 4 besteht in dem Ausführungsbeispiel aus insgesamt vier jeweils im Wechsel aufgesputterten Titanoxid- und Siliziumoxidschichten. Die Funktion dieses Ausführungsbeispiels ist die einer Kaltlichtspiegelbeschichtung auf einem besonders hoch reflektierenden Metallsubstrat mit besonders guter Kaltlichtspiegelwirkung. Im Zentrum des Reflektors ist schematisch eine Lichtquelle 7 eingezeichnet.

In Fig. 1g ist in schematischer Querschnittansicht ein Beispiel eines erfindungsgemäßen Reflektors dargestellt. Auf der Reflektorinnenseite ist eine absorbierende Schwarzschicht 33 und darauf ein Wechselschichtsystem aufgebracht, welches wie bei einem Kaltlicht-Reflektor sichtbares Licht reflektiert und Infrarotlicht transmittiert. Das Infrarotlicht wird von der Schwarzschicht 33 absorbiert und in Wärme umgewandelt und kann durch den Reflektorkörper, beziehungsweise das Metallsubstrat aufgenommen und eventuell über Kühlmittel abgeleitet werden.

Die Schwarzschicht umfasst eine durch Dampfphasenabscheidung aufgebrachte TiCN, WCH oder AlTiN-Schicht. Hinsichtlich der Temperaturwechselbeständigkeit hat sich auch eine absorbierende Email-Schicht als besonders geeignet erwiesen. Ebenfalls kann eine solche Schicht auch galvanisch als absorbierende Eloxal-Schicht ausgeführt sein. Weiterhin geeignet sind Schwarzchrom und/oder Schwarznickel-Schichten.

Eine erfindungsgemäße Schwarzschicht ist insbesondere dann geeignet, wenn sie im sichtbaren und insbesondere auch im Infrarotbereich bis 1800 Nanometern Wellenlänge eine Absorption von zumindest 80%, bevorzugt bis 2400 Nanometern Wellenlänge eine Absorption von zumindest 75% aufweist.

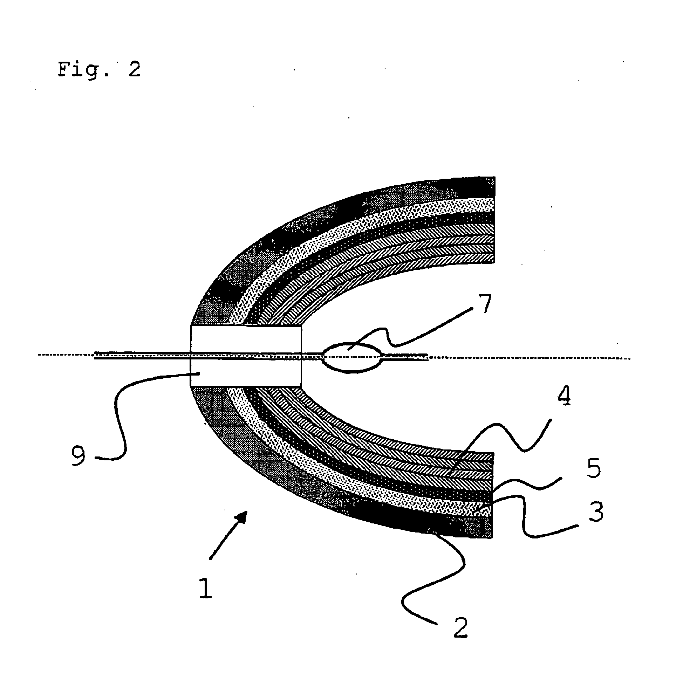

Fig. 2 zeigt ebenfalls eine schematische Schnittansicht eines Reflektors 1 mit einem dickwandigen Metallsubstrat 2, einer Reflexionsschicht 3 und einer Infrarot-absorbierenden Kaltlichtspiegelbeschichtung am Beispiel der Ausführungsform in Fig. 1c. Als Lichtquelle 7 ist eine Hochleistungslampe vorgesehen.

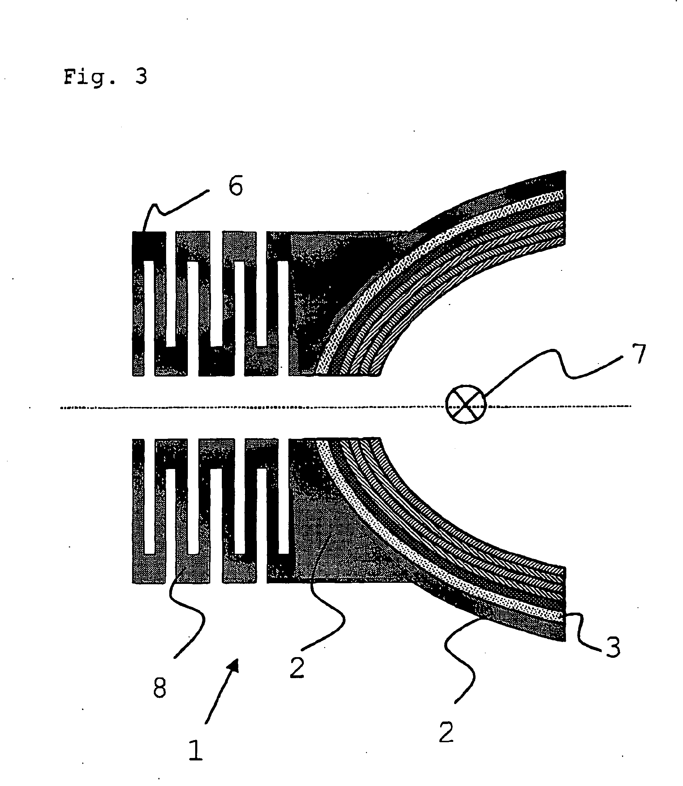

Fig. 3 zeigt ebenfalls ein schematisches Beispiel für einen Reflektor 1. Auch dieser Reflektor 1 ist aus einem Metallvollblock durch ein spanabhebendes Verfahren hergestellt. Der Reflektor ist einstückig ausgebildet. Das Metallsubstrat 2 weist an seiner Rückseite mäanderförmige Kühlrippen 8 auf und ist auf der Vorderseite ebenfalls mit einer Reflexionsschicht 3, und einer Infrarot-absorbierenden Kaltlichtspiegelbeschichtung am Beispiel der Ausführungsform in Fig. 1c versehen.

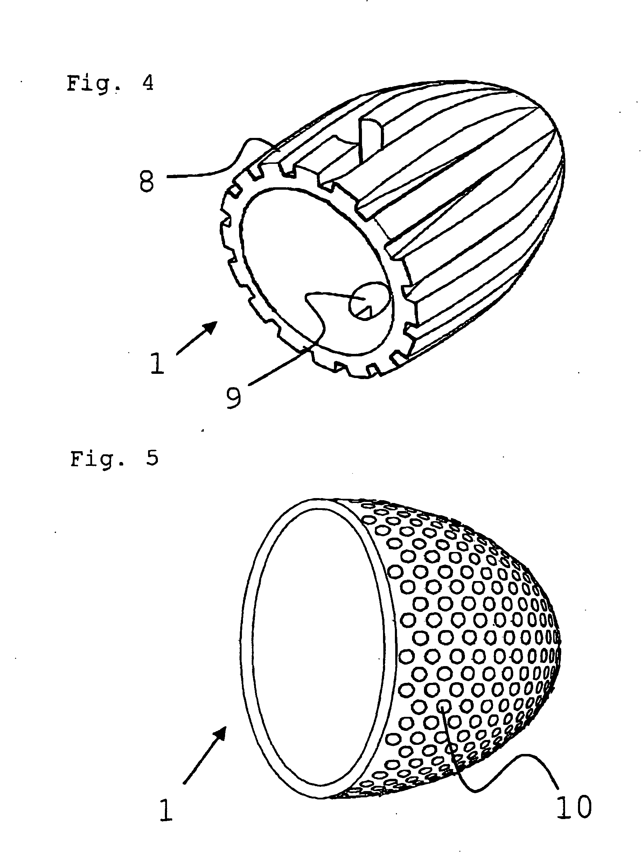

Fig. 4 zeigt ein weiteres Ausführungsbeispiel eines Reflektors schematisch in einer perspektivischen Ansicht. Der Reflektor 1 weist Kühlrippen 8 sowie eine Aussparung 9 in Form einer Bohrung in der Seitenwand auf, um ein Leuchtmittel (nicht zu sehen) einzubringen.

Fig. 5 zeigt eine weitere Ausführungsform eines Reflektors. Dieser Reflektor 1 hat auf der Rückseite eine Struktur in Form von muldenförmigen Einsenkungen 10, auch Dimpel genannt. Diese Dimpel führen bei geeigneten Randbedingungen zur Erzeugung von Wirbeln des vorbeiströmenden Kühlfluids. So kann die Wärmeabfuhr des Reflektors wesentlich verbessert werden.

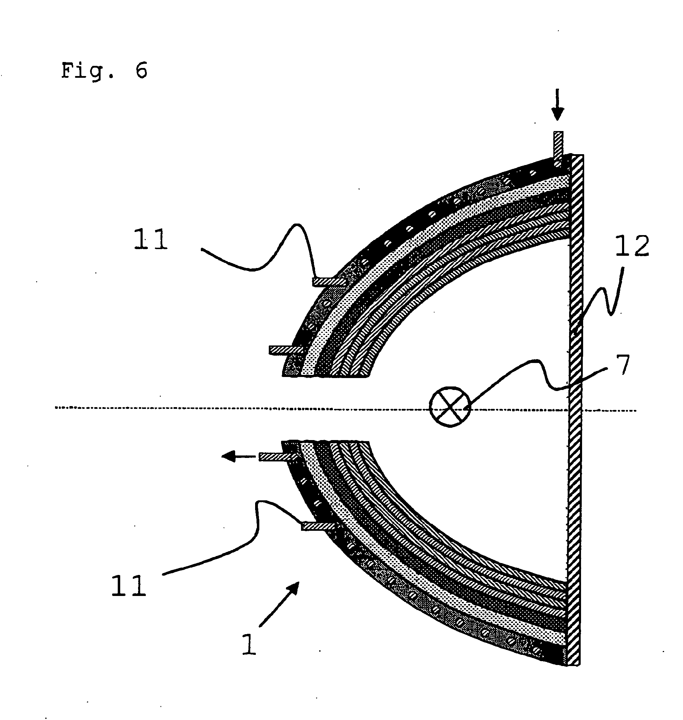

Fig. 6 zeigt eine weitere schematische Schnittansicht eines Reflektors 1. Dieser Reflektor weist als Passmittel Passstifte 11 auf, mit denen der Reflektor definiert in einer Halterung (nicht zu sehen) eingesetzt werden kann. Auf der Vorderseite ist zusätzlich eine Infrarot-absorbierende Scheibe 12 angeordnet, so dass nur eine geringe Menge von Infrarotstrahlung nach außen tritt.

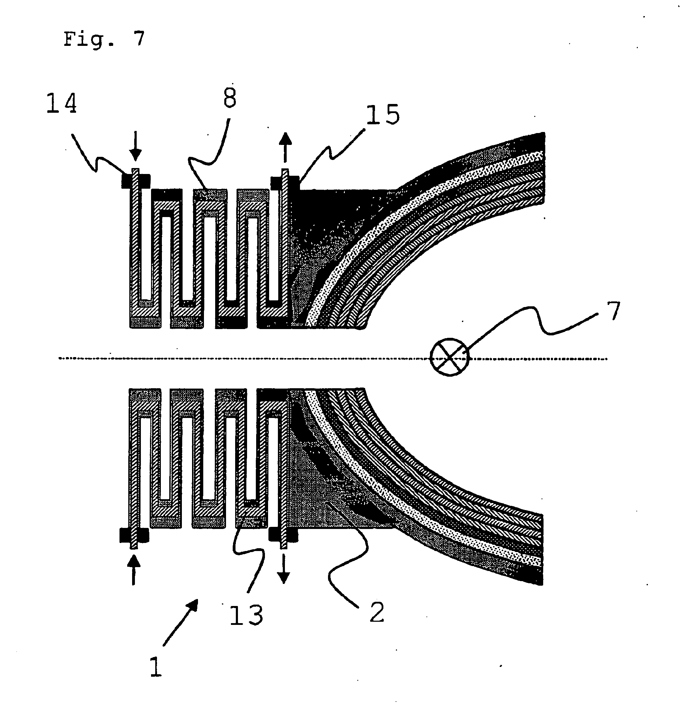

Fig. 7 zeigt eine weitere schematische Schnittansicht eines Ausführungsbeispiels eines Reflektors 1. Auch dieser Reflektor umfasst ein Metallsubstrat 2. Der Reflektor weist mäanderförmige Kühlrippen 8 auf, in die Kühlkanäle 13 eingelassen sind. Am Einlass 14 und am Auslass 15 sind die Kühlkanäle an einen externen Kühlkreislauf (nicht zu sehen) anschließbar.

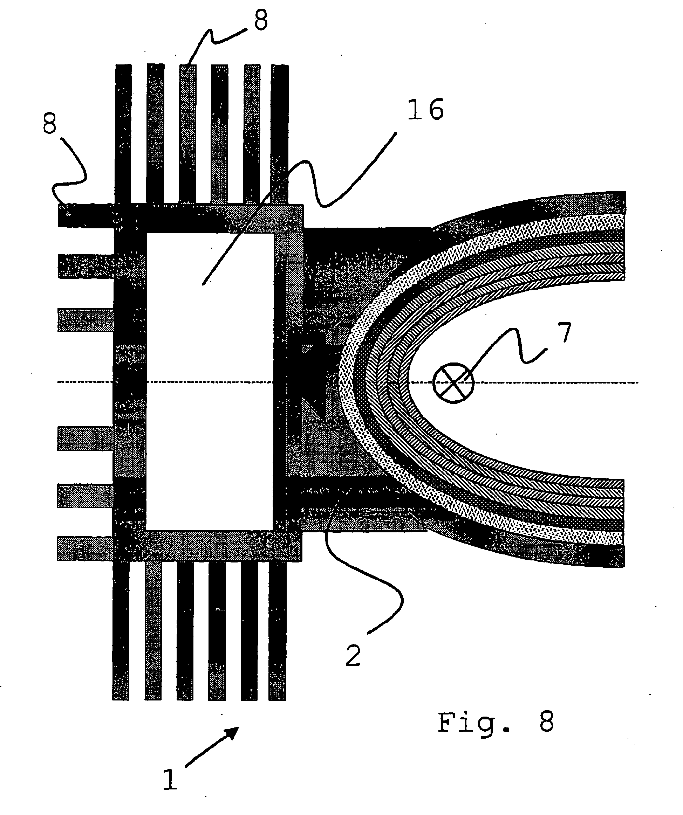

Fig. 8 zeigt eine weitere vorteilhafte Ausführungsform eines Reflektors. Der Reflektor 1 umfasst einen Metallgrundkörper aus einem Metallsubstrat 2, der randseitige Kühlrippen 8 aufweist. Rückseitig weist der Reflektor 1 ferner einen Hohlraum 16 auf, der mit Kühlmittel gefüllt ist, was in dem Hohlraum durch Konvektion die Kühlung weiter verbessert. So ist es möglich auch bei einem Reflektor 1, der eine Lichtquelle 7 in Form eines Hochleistungsleuchtmittel umfasst, auf eine Zwangsbelüftung mittels beispielsweise elektrisch betriebener Ventilatoren zu verzichten.

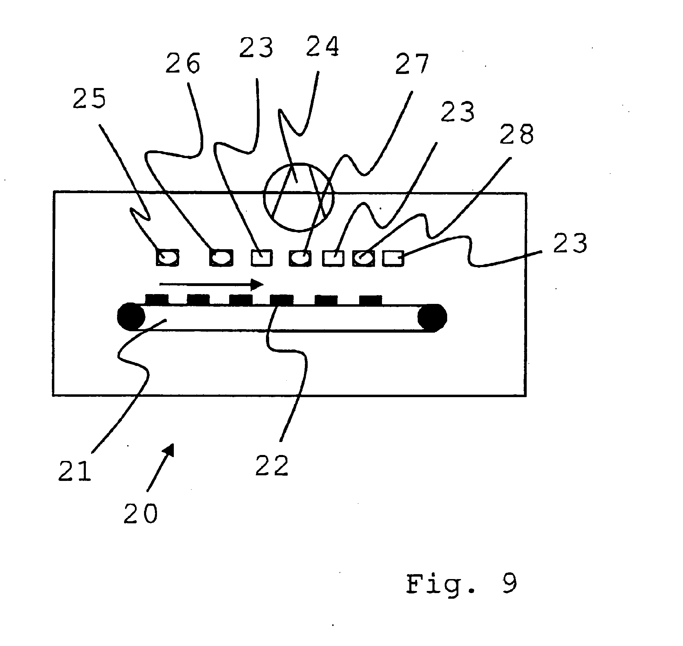

Fig. 9 zeigt eine schematische Ausführungsform einer Beschichtungsanlage 20 für das erfindungsgemäße Beschichtungsverfahren. Die Beschichtungsanlage 20 umfasst ein Laufband 21, auf dem die Reflektorsubstrate 22 angeordnet werden. Die Laufrichtung ist mit einem Pfeil markiert. Mittels eines Sputterverfahrens kann durch ein Silber- oder Aluminiumtarget 25 zunächst eine reflektierende Silber- oder Aluminiumschicht aufgebracht werden. Durch ein Chromtarget 26 kann anschließend eine Chromschicht aufgesputtert werden. Sodann läuft das Substrat an Siliziumtargets 27 und Titantargets 28 vorbei. Mittels dazwischen angeordneten sauerstoffplasmaquellen 23 ist es möglich, aus der Chromschicht eine Chromoxidschicht zu machen und ein Titan- und Siliziumoxidwechselschichtsystem aufzubringen. Die Anlage wird über zumindest eine Vakuumpumpe 24 evakuiert.

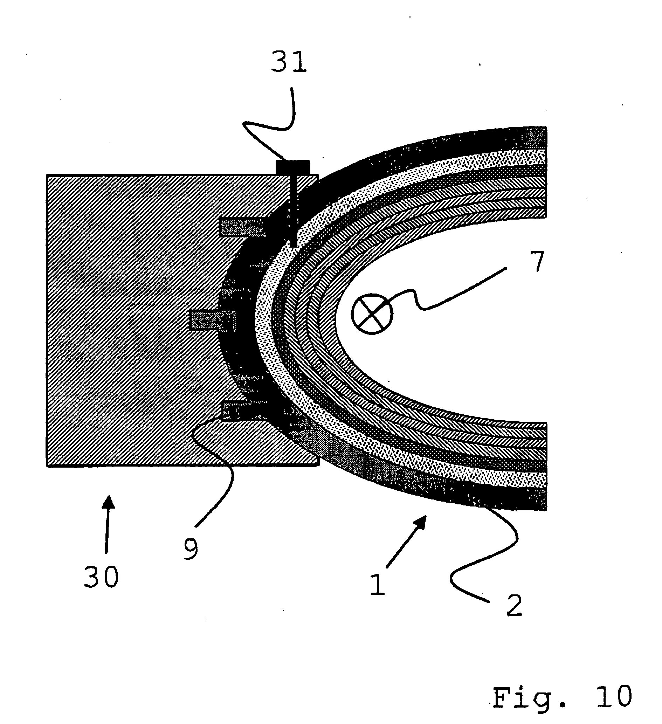

Fig. 10 zeigt eine schematische Ansicht eines Projektionssystems. Der Reflektor weist Passmittel in Form von Passstiften 11 auf, die Teil des Metallgrundkörpers 2 sind. Im Reflektor 1 ist eine Lichtquelle 7 in Form einer Hochleistungslichtlampe angeordnet. Durch die Passstifte 11 kann der Reflektor 1 lagedefiniert in eine Halterung 30 eingesetzt werden. Sodann wird der Reflektor 1 mittels einer Schraube 31, die durch die Halterung 30 schraubbar ist, gegen Herausfallen gesichert.

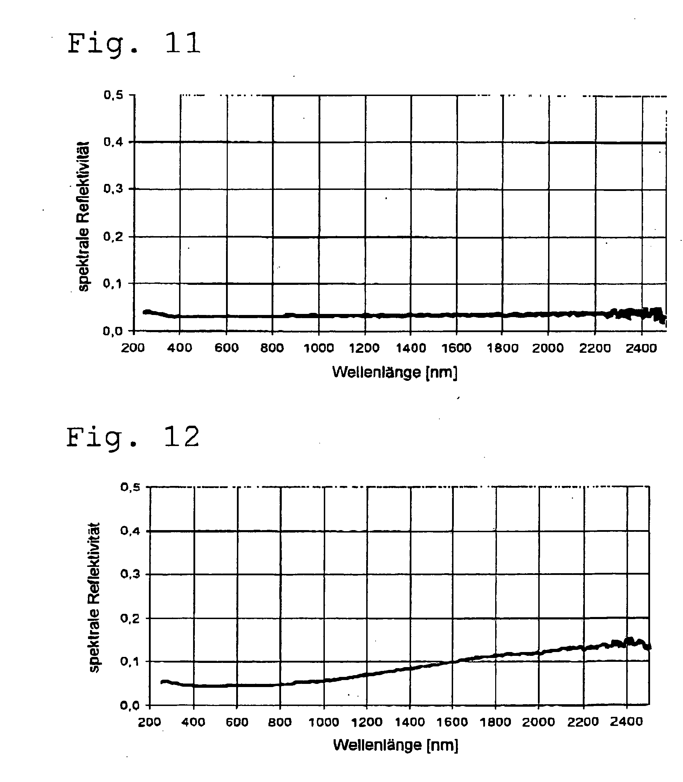

Die Fig. 11 bis 13 zeigen die spektralen Absorptionseigenschaften verschiedener Ausführungsbeispiele von infrarotabsorbierenden Schichten, die zum Beispiel als Schwarzschicht 33 für einen Reflektor gemäß Fig. 1g oder zusätzlich oder alternativ zu einer absorbierenden Chromoxidschicht 5, wie sie die Ausführungsbeispiele der Fig. 1c bis 1f oder Fig. 2 aufweisen, eingesetzt werden können. Dabei zeigt Fig. 11 die spektrale Reflexion einer Schwarzchrom-Schicht. Eine derartige Schicht wird vorzugsweise galvanisch auf dem metallischen Reflektorkörper abgeschieden. Anhand von Fig. 11 ist zu erkennen, daß eine derartige Schicht sehr gute Absorptionseigenschaften über einen weiten Wellenlängenbereich aufweist. So liegt die spektrale Absorption in einem Bereich von unter 300 nm bis über 2400 nm bei ca. 95 % der eingestrahlten Strahlung.

In Fig. 12 sind die Absorptionseigenschaften einer Schwarz-Eloxalschicht als Schwarzschicht dargestellt. Die Absorption ist hier im sichtbaren Spektralbereich besonders hoch, die Reflektivität steigt dann im Infraroten langsam an. Insgesamt zeigt sich, daß mit einer Schwarz-Eloxalschicht ca. 85% bis 95% der eingestrahlten Strahlung im Wellenlängenbereich von 400 Nanometern bis 2400 Nanometern absorbiert werden.

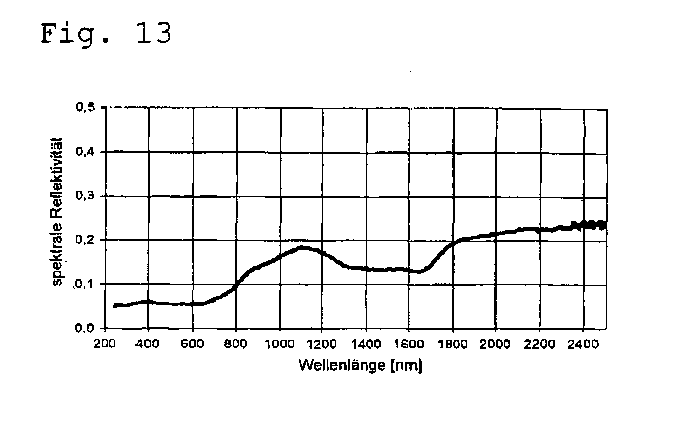

Fig. 13 schließlich zeigt die spektrale Reflektivität einer Schwarzschicht in Form einer absorbierenden Emailschicht. Die Absorptionseigenschaften sind etwas schlechter als die von Schwarz-Eloxal- oder Schwarzchrom-Schichten, jedoch wird auch hier im sichtbaren und insbesondere auch im Infrarotbereich eine Absorption von im Mittel zumindest 75% erreicht. Die spektrale Absorption bleibt sogar vom Ultraviolettbereich bis zum Infraroten bei 2400 Nanometern über 75%, in einem Bereich bis 1800 Nanometern Wellenlänge insbesondere über ca. 80%. Die Email-Schicht weist außerdem eine sehr gute Haftung auf dem Metallsubstrat und eine hohe Temperaturwechselbeständigkeit auf.

Bezugszeichenliste
- 1: Reflektor
- 2: Metallsubstrat
- 3: Reflexionsschicht
- 4: Wechselschicht
- 5: Cromoxidschicht
- 6: Schutzschicht
- 7: Lichtquelle
- 8: Kühlrippen
- 9: Aussparung
- 10: Einsenkung
- 11: Passstift
- 12: Scheibe
- 13: Kühlkanal
- 14: Einlass
- 15: Auslass
- 16: Hohlraum
- 20: Beschichtungsanlage
- 21: Laufband
- 22: Substrat
- 23: Sauerstoffquelle
- 24: Vakuumpumpe
- 25: Al bzw. Ag-Target
- 26: Cr-Target
- 27: Si-Target
- 28: Ti-Target
- 30: Halterung
- 31: Schraube
- 33: Schwarz schicht

## Patentansprüche

1. Reflektor mit einer reflektierenden Innenseite und einer Außenseite, wobei der Reflektor ein Metallsubstrat und zumindest eine mittels eines PVD- oder CVD-Verfahrens abgeschiedene Beschichtung aufweist und wobei zumindest auf der Innenseite eine Schwarzschicht vorhanden ist, **dadurch gekennzeichnet, daß** die Schwarzschicht eine TiCN-, WCH- oder AlTiN-Schicht umfaßt.

2. Reflektor nach dem vorstehenden Anspruch, **dadurch gekennzeichnet dass** der Reflektor zumindest an der Außenseite Kühlrippen aufweist.

3. Reflektor nach einem der vorstehenden Ansprüche, **dadurch gekennzeichnet, dass** der Reflektor Kühlkanäle aufweist.

4. Reflektor nach einem der vorstehenden Ansprüche, **dadurch gekennzeichnet, dass** der Reflektor zumindest einen Flansch zum Anschluss an einen externen Kühlmittelkreislauf umfasst.

5. Reflektor nach einem der vorstehenden Ansprüche, **dadurch gekennzeichnet, dass** der Reflektor zumindest einen zumindest teilweise mit einem Kühlmittel gefüllten Hohlraum aufweist.

6. Reflektor nach dem vorstehenden Anspruch, **dadurch gekennzeichnet, dass** ein Kühlmittel mit einem Phasenübergang in etwa bei Betriebstemperatur hat, insbesondere das Kühlmittel Propan und/oder Butan umfasst.

7. Reflektor nach einem der vorstehenden Ansprüche, **dadurch gekennzeichnet, dass** der Reflektor Passmittel, insbesondere Stifte, Nut, Feder oder Konus, aufweist.

8. Reflektor nach einem der vorstehenden Ansprüche, **dadurch gekennzeichnet, daß** die Schwarzschicht eine absorbierende Eloxal-Schicht umfasst.

9. Reflektor nach einem der vorstehenden Ansprüche, **dadurch gekennzeichnet, daß** die Schwarzschicht eine Schwarzchrom und/oder Schwarznickel-Schicht umfasst.

10. Reflektor nach einem der vorstehenden Ansprüche, **gekennzeichnet durch** eine zumindest auf der Reflektorinnenseite angeordnete Schwarzschicht, welche im sichtbaren und insbesondere auch im Infrarotbereich bis 1800 Nanometern Wellenlänge eine Absorption von zumindest 80%, bevorzugt bis 2400 Nanometern Wellenlänge eine Absorption von zumindest 75% aufweist.

11. Reflektor nach einem der vorstehenden Ansprüche, **dadurch gekennzeichnet, dass** die Oberfläche der Innenseite einen Mittenrauhwert Rₐ von unter 200 nm, bevorzugt unter 50 nm, besonders bevorzugt unter 20 nm aufweist.

12. Reflektor nach einem der vorstehenden Ansprüche, **dadurch gekennzeichnet, dass** der Reflektor zumindest auf der Innenseite eine Toleranzfeldbreite von unter 200 µm, bevorzugt unter 50 µm, besonders bevorzugt unter 10 µm aufweist.

13. Reflektor nach einem der vorstehenden Ansprüche, **dadurch gekennzeichnet, dass** der Reflektor zumindest auf der reflektierenden Innenseite eine Materialdicke über 0,3 mm, bevorzugt über 0,8 mm, besonders bevorzugt über 1,5 mm aufweist.

14. Reflektor nach einem der vorstehenden Ansprüche, **dadurch gekennzeichnet, dass** der Reflektor einstückig ausgebildet ist.

15. Reflektor nach einem der vorstehenden Ansprüche, **dadurch gekennzeichnet, dass** der Reflektor zumindest auf der Rückseite Einsenkungen mit im Wesentlichen muldenförmigen Querschnitt aufweist.

16. Verfahren zur Beschichtung eines Metallreflektors, umfassend die Schritte:
- Bereitstellen eines Reflektorsubstrates,
- Aufbringen einer TiCN, WCH oder AlTiN-enthaltende absorbierende Schwarzschicht durch Dampfphasenabscheidung zumindest auf der Reflektorinnenseite.

17. Verfahren zur Beschichtung eines Metallreflektors nach dem vorstehenden Anspruch, **dadurch gekennzeichnet, dass** als Substrat ein aus einem Vollmaterial durch ein materialabtragendes Fertigungsverfahren hergestelltes Reflektorsubstrat verwendet wird.

18. Verfahren zur Beschichtung eines Metallreflektors nach dem vorstehenden Anspruch, **dadurch gekennzeichnet, dass** das als Reflektorsubstrat ein tiefgezogenes Metallreflektorsubstrat verwendet wird.

19. Verfahren zur Beschichtung eines Metallreflektors nach einem der vorstehenden Ansprüche, **dadurch gekennzeichnet, dass** eine im Wesentlichen Infrarot-Strahlung absorbierende Schicht abgeschieden wird.

20. Verfahren zur Beschichtung eines Metallreflektors nach einem der vorstehenden Ansprüche, **dadurch gekennzeichnet, dass** eine Metallschicht abgeschieden und oxidiert wird.

21. Verfahren gemäß einem der vorstehenden Ansprüche, **dadurch gekennzeichnet, daß** zumindest auf der Reflektorinnenseite eine absorbierende Eloxal-Schicht galvanisch oder durch chemische Reaktion mit dem Substratmaterial hergestellt wird.

22. Verfahren gemäß einem der vorstehenden Ansprüche, **dadurch gekennzeichnet, daß** zumindest auf der Reflektorinnenseite eine absorbierende Schwarzchrom- oder Schwarznickelschicht aufgebracht wird.

23. Verfahren zur Beschichtung eines Metallreflektors nach einem der vorstehenden Ansprüche, **dadurch gekennzeichnet, dass** eine Oxid- und/oder Nitridschicht abgeschieden wird.

24. Verfahren zur Beschichtung eines Metallreflektors nach einem der vorstehenden Ansprüche, **dadurch gekennzeichnet, dass** auf das Metallsubstrat zumindest eine Reflexionsschicht abgeschieden wird.

25. Verfahren zur Beschichtung eines Metallreflektors nach einem dem vorstehenden Anspruch, **dadurch gekennzeichnet, dass** als Reflexionsschicht eine Aluminium und/oder Silberschicht aufgebracht wird.

26. Verfahren zur Beschichtung eines Metallreflektors nach einem der vorstehenden Ansprüche, **dadurch gekennzeichnet, dass** eine transparente Schutzschicht auf den Reflektor aufgebracht wird.

27. Verfahren zur Beschichtung eines Metallreflektors nach einem der vorstehenden Ansprüche., **dadurch gekennzeichnet, dass** eine transparente Wechselschicht aufgebracht wird.

28. Verfahren zur Beschichtung eines Metallreflektors nach dem vorstehenden Anspruch, **dadurch gekennzeichnet, dass** die Wechselschicht Siliziumoxid und Titanoxid umfasst.

29. Verfahren zur Beschichtung eines. Metallreflektors nach einem der vorstehenden Ansprüche, **dadurch gekennzeichnet, dass** zumindest eine Chromoxidschicht abgeschieden wird.

30. Verfahren zur Beschichtung eines Metallreflektors nach einem der vorstehenden Ansprüche.; **dadurch gekennzeichnet, dass** zumindest eine.Schicht mittels eines PVD-, insbesondere Sputter oder Aufdampf-, oder CVD-Verfahrens aufgebracht wird.

31. Verfahren zur Beschichtung eines Metallreflektors nach einem der vorstehenden Ansprüche, **dadurch gekennzeichnet, dass** zumindest zwei Schichten in einer Vakuumanlage aufgebracht werden.

32. Verfahren zur Beschichtung eines Metallreflektors nach einem der vorstehenden Ansprüche, **dadurch gekennzeichnet, dass** an der Rückseite im Wesentlichen Kühlrippen angeschweißt, angelötet oder angeklebt werden.

33. Verfahren zur Beschichtung eines Metallreflektors nach einem der vorstehenden Ansprüche, **dadurch gekennzeichnet, dass** die Kühlrippen im Wesentlichen als parallel zur Reflektorachse angeordnete Finnen ausgebildet werden.

34. Verfahren zur Beschichtung eines Metallreflektors nach dem vorstehenden Anspruch, **dadurch gekennzeichnet, dass** die Finnen Zentrierungsmittel, insbesondere Passstifte umfassen.

35. Verfahren zur Beschichtung eines Metallreflektors nach einem der vorstehenden Ansprüche, **dadurch gekennzeichnet, dass** auf das Reflektorsubstrat zunächst eine Reflexionsschicht, insbesondere eine Aluminium oder Silber umfassende Schicht, dann eine Infrarot-Strahlung absorbierende Schicht und dann eine Wechselschicht, insbesondere eine Siliziumoxid und Titanoxid umfassende Wechselschicht abgeschieden, insbesondere aufgesputtert wird.

36. Verfahren zur Beschichtung eines Metallreflektors nach dem vorstehenden Anspruch, **dadurch gekennzeichnet, dass** die Schichten nacheinander in einer Beschichtungsanlage abgeschieden werden.

## Claims

1. A reflector with a reflective inner surface and an outer surface, the reflector comprising a metal substrate and at least one coating deposited by a PVD or a CVD method, and including a black layer at least at said inner surface, **characterized in that** said black layer comprises a TiCN, a WCH or an AlTiN layer.

2. The reflector according to the preceding claim, **characterized in that** the reflector is provided with cooling fins, at least at its outer surface.

3. The reflector according to any of the preceding claims, **characterized in that** the reflector comprises cooling passages.

4. The reflector according to any of the preceding claims, **characterized in that** the reflector comprises at least one flange for connection to an external coolant circuit.

5. The reflector according to any of the preceding claims, **characterized in that** the reflector has a cavity which is at least partially filled with a coolant.

6. The reflector according to the preceding claim, **characterized in that** said coolant exhibits a phase transition approximately at the operation temperature, with said coolant in particular comprising propane and/or butane.

7. The reflector according to any of the preceding claims, **characterized in that** the reflector has fitting means, in particular pins, groove, tongue, or cone.

8. The reflector according to any of the preceding claims, **characterized in that** said black layer comprises an absorbing eloxal layer.

9. The reflector according to any of the preceding claims, **characterized in that** said black layer comprises a black chromium and/or black nickel layer.

10. The reflector according to any of the preceding claims, **characterized by** a black layer arranged at least at the inner surface of the reflector, which layer has an absorption of at least 80% in the visible range and in particular also in the infrared range up to a wavelength of 1800 nanometers, preferably an absorption of at least 75% up to a wavelength of 2400 nanometers.

11. The reflector according to any of the preceding claims, **characterized in that** the inner surface has a finish with a mean roughness index Rₐ below 200 nm, preferably below 50 nm, more preferably below 20 nm.

12. The reflector according to any of the preceding claims, **characterized in that** the reflector has, at least at its inner surface, a tolerance zone width smaller than 200 µm, preferably smaller than 50 µm, more preferably smaller than 10 µm.

13. The reflector according to any of the preceding claims, **characterized in that** the reflector has, at least at its reflective inner surface, a material thickness of more than 0.3 mm, preferably more than 0.8 mm, more preferably more than 1.5 mm.

14. The reflector according to any of the preceding claims, **characterized in that** the reflector is of one-piece construction.

15. The reflector according to any of the preceding claims, **characterized in that** the reflector has depressions, at least in its rear surface, said depressions having a substantially trough-shaped cross section.

16. A method for coating a metal reflector, comprising the steps of:
- providing a reflector substrate,
- applying a TiCN, a WCH, or an AlTiN containing absorbing black layer onto at least the inner surface of the reflector by vapor deposition.

17. The method for coating a metal reflector according to the preceding claim, **characterized in that** a reflector substrate which is produced from a bulk material by a material ablating machining method is used as a substrate.

18. The method for coating a metal reflector according to the preceding claim, **characterized by** using a deep-drawn metal reflector substrate as a reflector substrate.

19. The method for coating a metal reflector according to any of the preceding claims, **characterized by** depositing a substantially infrared radiation absorbing layer.

20. The method for coating a metal reflector according to any of the preceding claims, **characterized by** depositing and oxidizing a metal layer.

21. The method according to any of the preceding claims, **characterized in that** an absorbing eloxal layer is produced at least at the inner surface of the reflector, by electro-plating or by a chemical reaction with the substrate material.

22. The method according to any of the preceding claims, **characterized by** applying an absorbing black chromium layer or black nickel layer at least onto the inner surface of the reflector.

23. The method for coating a metal reflector according to any of the preceding claims, **characterized by** depositing an oxide and/or nitride layer.

24. The method for coating a metal reflector according to any of the preceding claims, **characterized by** depositing at least one reflective layer onto the metal substrate.

25. The method for coating a metal reflector according to any of the preceding claims, **characterized by** applying an aluminum layer and/or a silver layer as a reflective layer.

26. The method for coating a metal reflector according to any of the preceding claims, **characterized by** applying a transparent protection layer onto the reflector.

27. The method for coating a metal reflector according to any of the preceding claims, **characterized by** applying a transparent alternating layer.

28. The method for coating a metal reflector according to the preceding claim, **characterized in that** said alternating layer comprises silicon oxide and titanium oxide.

29. The method for coating a metal reflector according to any of the preceding claims, **characterized by** depositing at least one chromium oxide layer.

30. The method for coating a metal reflector according to any of the preceding claims, **characterized in that** at least one layer is applied by a PVD method, in particular in a sputter or vapor deposition process, or by a CVD method.

31. The method for coating a metal reflector according to any of the preceding claims, **characterized in that** at least two layers are applied in a vacuum device.

32. The method for coating a metal reflector according to any of the preceding claims, **characterized in that** cooling fins substantially are welded, soldered, or glued to the rear surface.

33. The method for coating a metal reflector according to any of the preceding claims, **characterized in that** the cooling fins are formed as fins which are arranged substantially in parallel to the axis of the reflector.

34. The method for coating a metal reflector according to the preceding claim, **characterized in that** said fins comprise centering means, in particular fitting pins.

35. The method for coating a metal reflector according to any of the preceding claims, **characterized by** first depositing a reflection layer onto the reflector substrate, in particular an aluminum or silver containing layer, followed by an infrared radiation absorbing layer and then by an alternating layer, in particular an alternating layer comprising silicon oxide and titanium oxide, in particular by sputter deposition.

36. The method for coating a metal reflector according to the preceding claim, **characterized in that** the layers are successively deposited in a coating device.

## Revendications

1. Réflecteur doté d'un côté intérieur réfléchissant et d'un côté extérieur, le réflecteur présentant un substrat métallique et au moins un revêtement déposé au moyen d'un procédé PVD ou d'un procédé CVD et une couche noire étant présente au moins sur le côté intérieur, **caractérisé en ce que** la couche noire comporte une couche de TiCN, WCH ou AlTiN.

2. Réflecteur selon la revendication précédente, **caractérisé en ce que** le réflecteur présente des nervures de refroidissement au moins sur le côté extérieur.

3. Réflecteur selon l'une quelconque des revendications précédentes, **caractérisé en ce que** le réflecteur présente des canaux de refroidissement.

4. Réflecteur selon l'une quelconque des revendications précédentes, **caractérisé en ce que** le réflecteur comporte au moins une bride pour le raccordement à un circuit de réfrigérant externe.

5. Réflecteur selon l'une quelconque des revendications précédentes, **caractérisé en ce que** le réflecteur présente au moins une cavité remplie au moins partiellement avec un réfrigérant.

6. Réflecteur selon la revendication précédente, **caractérisé en ce qu'**un réfrigérant a un gaz avec une transition de phases à peu près à la température de service, en particulier le réfrigérant comporte du propane et/ou du butane.

7. Réflecteur selon l'une quelconque des revendications précédentes, **caractérisé en ce que** le réflecteur présente des moyens d'ajustage, en particulier des goupilles, une rainure, une languette ou un cône.

8. Réflecteur selon l'une quelconque des revendications précédentes, **caractérisé en ce que** la couche noire comporte une couche d'oxydation anodique absorbante.

9. Réflecteur selon l'une quelconque des revendications précédentes, **caractérisé en ce que** la couche noire comporte un chrome noir et/ou une couche de nickel noire.

10. Réflecteur selon l'une quelconque des revendications précédentes, **caractérisé par** une couche noire disposée au moins sur le côté intérieur du réflecteur, qui présente dans la zone visible et en particulier également dans la zone infrarouge une absorption d'au moins 80 % jusqu'à 1 800 nanomètres de longueur d'onde, une absorption d'au moins 75 % jusqu'à 2 400 nanomètres de longueur d'onde.

11. Réflecteur selon l'une quelconque des revendications précédentes, **caractérisé en ce que** la surface du côté intérieur présente une rugosité moyenne Rₐ inférieure à 200 nm, de préférence inférieure à 50 nm, avec une préférence particulière inférieure à 20 nm.

12. Réflecteur selon l'une quelconque des revendications précédentes, **caractérisé en ce que** le réflecteur présente au moins sur le côté intérieur une largeur de zone de tolérance inférieure à 200 µm, de préférence inférieure à 50 µm, avec une préférence particulière inférieure à 10 µm.

13. Réflecteur selon l'une quelconque des revendications précédentes, **caractérisé en ce que** le réflecteur présente au moins sur le côté intérieur réfléchissant une épaisseur de matériau supérieure à 0,3 mm, de préférence supérieure à 0,8 mm, avec une préférence particulière supérieure à 1,5 mm.

14. Réflecteur selon l'une quelconque des revendications précédentes, **caractérisé en ce que** le réflecteur est conçu d'une seule pièce.

15. Réflecteur selon l'une quelconque des revendications précédentes, **caractérisé en ce que** le réflecteur présente au moins sur le côté arrière des enfoncements présentant une section sensiblement en forme de cavité.

16. Procédé pour le revêtement d'un réflecteur métallique, comportant les étapes suivantes :
- mise à disposition d'un substrat de réflecteur,
- application d'une couche noire absorbante et contenant du TiCN, WCH ou AlTiN par séparation en phase vapeur au moins sur le côté intérieur de réflecteur.

17. Procédé pour le revêtement d'un réflecteur métallique selon la revendication précédente, **caractérisé en ce qu'**on utilise comme substrat un substrat de réflecteur fabriqué dans un matériau plein par un procédé de fabrication avec enlèvement électrochimique.

18. Procédé pour le revêtement d'un réflecteur métallique selon la revendication précédente, **caractérisé en ce qu'**on utilise comme substrat de réflecteur un substrat de réflecteur métallique embouti profond.

19. Procédé pour le revêtement d'un réflecteur métallique selon l'une quelconque des revendications précédentes, **caractérisé en ce qu'**une couche absorbant essentiellement du rayonnement infrarouge est déposée.

20. Procédé pour le revêtement d'un réflecteur métallique selon l'une quelconque des revendications précédentes, **caractérisé en ce qu'**une couche métallique est déposée et oxydée.

21. Procédé selon l'une quelconque des revendications précédentes, **caractérisé en ce qu'**une couche d'oxydation anodique absorbante est fabriquée par galvanisation ou par réaction chimique avec le matériau de substrat au moins sur le côté intérieur du réflecteur.

22. Procédé selon l'une quelconque des revendications précédentes, **caractérisé en ce qu'**une couche de chrome noir ou une couche de nickel noir absorbante est appliquée au moins sur le côté intérieur du réflecteur.

23. Procédé pour le revêtement d'un réflecteur métallique selon l'une quelconque des revendications précédentes, **caractérisé en ce qu'**une couche d'oxyde et/ou de nitrure est déposée.

24. Procédé pour le revêtement d'un réflecteur métallique selon l'une quelconque des revendications précédentes, **caractérisé en ce qu'**au moins une couche de réflexion est déposée sur le substrat métallique.

25. Procédé pour le revêtement d'un réflecteur métallique selon l'une quelconque des revendications précédentes, **caractérisé en ce qu'**une couche d'aluminium et/ou une couche d'argent est appliquée comme couche de réflexion.

26. Procédé pour le revêtement d'un réflecteur métallique selon l'une quelconque des revendications précédentes, **caractérisé en ce qu'**une couche de protection transparente est appliquée sur le réflecteur.

27. Procédé pour le revêtement d'un réflecteur métallique selon l'une quelconque des revendications précédentes, **caractérisé en ce qu'**une couche alternative transparente est appliquée.

28. Procédé pour le revêtement d'un réflecteur métallique selon la revendication précédente, **caractérisé en ce que** la couche alternative comporte de l'oxyde de silicium et de l'oxyde de titane.

29. Procédé pour le revêtement d'un réflecteur métallique selon l'une quelconque des revendications précédentes, **caractérisé en ce qu'**au moins une couche d'oxyde de chrome est déposée.

30. Procédé pour le revêtement d'un réflecteur métallique selon l'une quelconque des revendications précédentes, **caractérisé en ce qu'**au moins une couche est appliquée au moyen d'un procédé PVD, en particulier un procédé de métallisation cathodique ou un procédé de métallisation sous vide ou d'un procédé CVD.

31. Procédé pour le revêtement d'un réflecteur métallique selon l'une quelconque des revendications précédentes, **caractérisé en ce qu'**au moins deux couches sont appliquées dans une installation de vide.

32. Procédé pour le revêtement d'un réflecteur métallique selon l'une quelconque des revendications précédentes, **caractérisé en ce que** essentiellement des nervures de refroidissement sont soudées, brasées ou collées sur la face arrière.

33. Procédé pour le revêtement d'un réflecteur métallique selon l'une quelconque des revendications précédentes, **caractérisé en ce que** les nervures de refroidissement sont réalisées essentiellement sous forme de goulottes disposées parallèlement à l'axe du réflecteur.

34. Procédé pour le revêtement d'un réflecteur métallique selon la revendication précédente, **caractérisé en ce que** les goulottes portent des moyens de centrage, en particulier des goupilles d'ajustage.

35. Procédé pour le revêtement d'un réflecteur métallique selon l'une quelconque des revendications précédentes, **caractérisé en ce que** pour commencer une couche de réflexion, en particulier une couche comportant de l'aluminium ou de l'argent, ensuite une couche absorbant du rayonnement infrarouge et ensuite une couche alternative, en particulier une couche alternative comportant de l'oxyde de silicium et de l'oxyde de titane est déposée, en particulier appliquée par métallisation cathodique, sur le substrat de réflecteur.

36. Procédé pour le revêtement d'un réflecteur métallique selon la revendication précédente, **caractérisé en ce que** les couches sont déposées les unes après les autres dans une installation de revêtement.
